# EUROPÄISCHE PATENTSCHRIFT

(11) **EP 2 397 833 B1**
(45) Veröffentlichungstag und Bekanntmachung des Hinweises auf die Patenterteilung: **14.08.2019**
(21) Anmeldenummer: 11170385.6
(22) Anmeldetag: 17.06.2011
(51) Int. Cl.: G01M 17/007, B25J 11/00, B60T 17/22

(54) **Befestigungsvorrichtung für einen Fahrroboter**
Fastening device for a robot driver
Dispositif de fixation pour un robot conducteur

(30) Priorität: 18.06.2010 DE 102010030282
(43) Veröffentlichungstag der Anmeldung: 21.12.2011
(73) Patentinhaber: AIP GmbH & Co. KG, 87490 Haldenwang (DE)
(72) Erfinder: Neubert, Thomas, 87437 Kempten (DE); Knestel, Anton, 87496 Hopferbach (DE); Curt, Michael, 87496 Untrasried (DE)
(74) Vertreter: MERH-IP Matias Erny Reichl Hoffmann Patentanwälte PartG mbB

(56) Entgegenhaltungen:
- DE-B3- 10 234 800

## Beschreibung

Die vorliegende Erfindung betrifft eine Vorrichtung zum Befestigen eines Fahrroboters in einem Kraftfahrzeug, die mittels eines Sicherheitsgurtes auf einem Fahrzeugsitz fixierbar ist. Die Vorrichtung umfasst ein Basiselement, das auf einer Fahrzeugsitzfläche auflegbar ist, wobei das Basiselement derart ausgestaltet ist, dass ein Fahrroboter daran befestigbar ist, und zumindest einen mit dem Basiselement in Kontakt stehenden Aktuator zum Spannen des Sicherheitsgurtes. Der Aktuator enthält einen Kontaktabschnitt, der in Kontakt mit dem Sicherheitsgurt bringbar ist. Der Einbau der erfindungsgemäßen Vorrichtung in ein Kraftfahrzeug ist technisch einfach und schnell durchführbar. Für die Fixierung der Vorrichtung ist lediglich der in jedem Kraftfahrzeug vorhandene Sicherheitsgurt notwendig, so dass die Vorrichtung ohne zusätzliche technisch komplexe Arretiersysteme funktionstüchtig ist.

Fahrroboter werden bei diversen Fahrzeugtests, insbesondere bei denen, die eine längere Prüfdauer nach sich ziehen, anstatt des menschlichen Fahrers in Kraftfahrzeugen eingesetzt. Die Fahrroboter haben u. a. den Vorteil, dass sie die Fahrzyklen exakt reproduzierbar durchführen. Der Fahrroboter muss in der Regel die Fahrpedale, wie Brems- und Gaspedal, sowie bei nicht automatisch geschalteten Fahrzeugen die Kupplung betätigen. Ferner muss der Fahrroboter bei manuell geschalteten Fahrzeugen den Schalthebel betätigen. Die Betätigungsmittel, z. B. der Steller für das Bremspedal, müssen dabei auf das Bremspedal eine entsprechende Kraft ausüben, die als Reaktionskraft auf die Halterung des Fahrroboters wirkt.

Dieser muss daher möglichst ortsfest mit dem Fahrersitz verbunden werden, so dass die Funktion bzw. die Bediengenauigkeit des Roboters nicht durch z.B. ein Verrutschen des Roboters während der Simulation beeinträchtigt wird.

Aus dem Stand der Technik sind Fahrroboter bekannt, die auf dem Fahrersitz des zu prüfenden Kraftfahrzeuges angeordnet und fixiert werden.

Beispielsweise wird in der DE 39 40 588 C2 ein Fahrroboter beschrieben, der sich über ein Abstützgestänge, das mit einem Lenkradrahmen verbunden ist, auf der Lenksäule des Kraftfahrzeuges abstützt und der Fahrroboter dadurch auf dem Fahrersitz fixiert wird. Hierbei wirkt sich nachteilig aus, dass das Lenkrad nicht frei ist und der Einbau des Fahrroboters mit einer aufwendigen Justierung und Montage des Abstützgestänges verbunden ist.

Auch die Vorrichtungen gemäß DE 44 33 997 C2 und DE 10 2006 040 021 A1 haben den Nachteil, dass beim Einbau vor jeder Prüfung eine aufwendige Montage und Justierung erforderlich ist. Beide Vorrichtungen werden aufwendig mittels Spann- und Abstützelementen bzw. mittels einer Adapterplatte und Feststellelementen am Fahrersitz montiert. Beim Einbau müssen diese Elemente zeitaufwendig jeweils einzeln justiert und montiert werden. Ferner wirken sich diese Elemente störend aus, da ein freier Zugang zu Verstellelementen des Fahrzeugsitzes behindert wird.

Die Haltevorrichtung für einen Fahrroboter gemäß DE 102 34 800 B3 wird mittels zweier Arretiereinrichtungen, die den Beckengurt des Fahrzeugsitzes festhalten, auf dem Fahrzeugsitz fixiert. Dazu wird jeweils ein rechter und linker Abschnitt des Beckengurtes in jeweils ein entsprechendes Arretierelement eingeklemmt, wozu beide Gurtabschnitte nach Bildung einer Schlaufe durch einen Schlitz hindurch um einen Haltebügel gelegt werden müssen.

Der Einbau des Fahrroboters ist zeitaufwendig und kompliziert, da das Einlegen des Beckengurtes in die Vorrichtung umständlich ist. Zudem wird nicht die Funktion des Gurtaufroller-Blockiersystems selbst genutzt, um eine Haltekraft zu erzeugen, sondern die komplexen Arretiersysteme halten sich über eine Klemmkraft am Beckengurt fest. Dies hat u.a. zur Folge, dass ein mechanisch funktionsloser Mittelabschnitt des Beckengurtes gebildet wird, der gesondert verstaut werden muss bzw. die Bediensicherheit vermindert. Das Arretiersystem kann ferner Beschädigungen am Gurt hinterlassen.

Eine Aufgabe der vorliegenden Erfindung ist es, eine Vorrichtung zu schaffen, die in einem Kraftfahrzeug mit geringem Zeitaufwand und technisch einfach sicher befestigbar ist.

Die vorstehend beschriebene Aufgabe der vorliegenden Erfindung wird durch die Merkmale der unabhängigen Ansprüche gelöst. Merkmale bevorzugter Ausführungsformen der vorliegenden Erfindung werden in den abhängigen Ansprüchen beschrieben.

Die erfindungsgemäße Vorrichtung zum Befestigen eines Fahrroboters in einem Kraftfahrzeug kann mittels eines Sicherheitsgurtes auf einem Fahrzeugsitz fixiert werden. Die Vorrichtung kann ein Basiselement, das auf einer Fahrzeugsitzfläche auflegbar ist, aufweisen, wobei das Basiselement derart ausgestaltet sein kann, dass ein Fahrroboter daran befestigbar sein kann. Ferner kann die Vorrichtung zumindest einen mit dem Basiselement in Kontakt stehenden Aktuator zum Spannen des Sicherheitsgurtes aufweisen. Der Aktuator kann einen Kontaktabschnitt umfassen, der in Kontakt mit dem Sicherheitsgurt bringbar sein kann. Weiterhin kann der Kontaktabschnitt des Aktuators zum Spannen des arretierten Sicherheitsgurtes vom Basiselement wegbewegbar sein.

Die Erfindung beruht dabei auf der Idee, dass die immanente Funktion des Sicherheitsgurtes des Kraftfahrzeuges selbst genutzt wird, um die Vorrichtung sicher, schnell und technisch einfach auf dem Fahrzeugsitz zu befestigen. Dabei hält das fahrzeugeigene Arretiermittels des Gurtes (Sicherheitsgurt-Blockiersystem) den Sicherheitsgurt arretiert und der Aktuator spannt den angeschnallten und arretierten Sicherheitsgurt, insbesondere den Beckengurt, derart, dass der Gurt die Vorrichtung in den Sitz presst und somit fixiert. Die Anpassung des Kontaktabschnitts zum Spannen des Beckengurtes gewährleistet eine sichere Positionierung des Gurtes und eine sichere Fixierung der Vorrichtung. Einbaustellzeiten werden beim Aus- und Einbau der Vorrichtung selbst bei verschiedenen Fahrzeugtypen auf ein Minimum reduziert. Der Ein- und Ausbau der Vorrichtung ist folglich genauso einfach wie das Anlegen eines Sicherheitsgurtes bei einem menschlichen Fahrzeugführer.

Der Kontaktabschnitt kann, wenn dieser in Kontakt mit dem arretierten Sicherheitsgurt steht, zwischen dem Sicherheitsgurt und dem Basiselement angeordnet sein. Zum Spannen des Sicherheitsgurtes kann ein Abstand zwischen dem Kontaktabschnitt und dem Basiselement vergrößert werden, so dass die Vorrichtung auf dem Fahrzeugsitz fixiert werden kann.

Durch die Abstandsvergrößerung des Kontaktabschnittes kann eine Anpassung der Vorrichtung an den arretieren Beckengurt vorgenommen werden, die den notwendigen Anpressdruck erzeugt, der die Vorrichtung im Fahrzeugsitz positionsfest hält. Ein aufwendiges Anpassen der Sicherheitsgurtlänge entfällt somit, da der Sicherheitsgurt lediglich um die auf dem Fahrzeugsitz angeordnete Vorrichtung gelegt wird, angeschnallt und arretiert wird.

Der Aktuator kann einen mechanisch angetriebenen Schieber enthalten.

Durch die Ausführung des Aktuators als Schieber wird eine Verfahrbarkeit des Kontaktabschnitts auf technische einfache Weise realisiert. Dadurch ist die Vorrichtung kostengünstig in der Herstellung und kompakt.

Der Kontaktabschnitt des Aktuators kann zwischen einer ersten und einer zweiten Position verfahrbar sein. Die erste Position kann eine Position sein, in der der Kontaktabschnitt am nächsten zum Basiselement angeordnet ist. Die zweite Position kann eine Position sein, in der der Kontaktabschnitt am weitesten entfernt vom Basiselement angeordnet ist.

Die erste Position, in der der Aktuator nicht oder nur minimal ausgefahren ist, hat den Vorteil, dass der Beckengurt bequem um die Vorrichtung gelegt werden kann, ohne dass der Aktuator bzw. die Kontaktabschnitte des Aktuators sich störend auswirkten.

Der Kontaktabschnitt des Aktuators kann in eine Gurtspannposition verfahrbar sein. Die Gurtspannposition kann einer Position des Kontaktabschnitts entsprechen, in der der Aktuator eine vorbestimmte Kraft ausübt.

Die Gurtspannposition ist die, in der die Vorrichtung auf optimale Weise durch den Beckengurt auf dem Fahrzeugsitz fixiert wird bzw. optimal durch den Beckengurt an den Fahrzeugsitz gepresst wird bzw. optimal zwischen der Sitzfläche und der Rückenlehne des Sitzes einerseits und dem Beckengurt andererseits eingeklemmt wird. Durch Messen bzw. Vorbestimmen der Kraft, die der Aktuator ausübt, kann auf technisch einfache Weise eine optimale Gurtspannung angefahren werden. Die Einstellung der Fixierung der Vorrichtung wird somit reproduzierbar und Beschädigungen am Gurt oder an der Vorrichtung durch Überspannen des Sicherheitsgurtes werden verhindert.

Ein Bedienhebel, der mit einer drehbar gelagerten Welle verbunden sein kann, kann zum Bedienen des Aktuators vorgesehen sein. Der Schieber kann einen linearen Zahnabschnitt aufweisen. Die drehbar gelagerte Welle kann mit dem Basiselement verbunden sein. Ferner kann an Welle ein Zahnradelement fest angeordnet ist. Das Zahnradelement kann in Zahneingriff mit dem linearen Zahnabschnitt stehen, so dass beim Bedienen des Bedienhebels die Welle mit dem Zahnradelement in Rotation versetzt werden kann und die Rotation durch das Übertragen von der Welle auf den linearen Zahnabschnitt in eine Translation des Schiebers transformiert werden kann.

Alternativ kann anstatt eines Hebels auch z.B. ein Drehknopf, ein Druckknopf oder ein Handgriff vorgesehen sein. Statt des linearen Zahnabschnitts kann auch ein Reibabschnitt vorgesehen sein, der in Reibkontakt mit einem Reibrad stehen kann, das mit der Welle verbunden ist. Vorteilhaft ist, dass die Vorrichtung mit einem einzelnen Bedienmittel, z.B. dem Bedienhebel, bedienbar ist, auch wenn mehrere Aktuatoren in der Vorrichtung verbaut sind. Die erleichtert die Bedienung der Vorrichtung beim Einbau. Die Kraftübertragung vom Hebel auf den Aktuator ist kompakt ausführbar und wartungsarm.

Ein Festellelement kann am Basiselement drehbar gelagert sein. Das Feststellelement kann einen vorderen zahnförmigen Abschnitt aufweisen. Der vordere zahnförmige Abschnitt kann in Zahneingriff mit dem Zahnradelement bringbar sein, so dass eine Drehrichtung des Zahnradelements sperrbar sein kann. Ferner kann das Festellelement einen Hebelabschnitt enthalten, mit dem der vordere zahnförmige Abschnitt aus dem Zahneingriff mit dem Zahnradelement herauslösbar ist, so dass das Zahnrad in beide Drehrichtungen drehbar sein kann.

Dies hat den Vorteil, dass der Schieber automatisch zuverlässig in der Gurtspannposition gehalten wird.

Eine Rutschkupplung kann derart an der Vorrichtung angeordnet sein, dass der Schieber, wenn dieser in der Gurtspannposition ist, nicht über die Gurtspannposition hinausverfahrbar ist.

Dadurch wird ein Überspannen des Gurtes und/oder eine mechanische Überbelastung der Vorrichtung sicher verhindert. Beschädigungen am Sicherheitsgurt, an der Vorrichtung oder am Fahrzeugsitz werden somit ausgeschlossen.

Das Basiselement kann eine Aussparung zur Aufnahme und zum Führen des Beckengurtes in einer ersten Position des Aktuators aufweisen.

Sinnvollerweise ist der Aktuator vor dem Anlegen des Sicherheitsgurtes in der ersten Position, so dass der Aktuator bzw. der Schieber nicht störend heraussteht. Die Aussparungen haben dann bzw. dabei den Vorteil, dass der Beckengurt, auch wenn der Aktuator in der ersten Position ist, definiert um die Vorrichtung verlegt werden kann und trotz eingefahrenen Aktuators sicher geführt bzw. in Position gehalten wird.

Die Aussparung kann an einem seitlichen Abschnitt des Basiselements, der längsseitig des Basiselements aus der Sitzkontaktfläche heraussteht, angeordnet sein. Die Aussparung kann ferner einen ersten Randabschnitt zum Einführen eines Teilabschnitts des Beckengurtes, der im Wesentlichen senkrecht zu der Sitzkontaktfläche ausgeführt sein kann, einen zweiten Randabschnitt zum Sichern des Beckengurtes gegen Verrutschen und/oder einen Basisabschnitt zum Aufliegen des Beckengurtes aufweisen. Die Flächennormale des Basisabschnittes kann im Wesentlichen in Richtung der Gurtbefestigungspostionen des Gurtes am Sitz zeigen.

Der Vorteil der Ausrichtung des Basisabschnittes liegt darin, dass der Gurt sicher und zuverlässig vom Basisabschnitt geführt wird und beim Einlegen keine Falten legt, die das Einlegen erschweren.

Der Basisabschnitt kann im Wesentlichen derart geformt sein, dass die Länge des Basisabschnitts im Wesentlichen der Breite des Beckengurtes entspricht. Ferner kann die Länge des Gurtauflageabschnittes der Länge des Basisabschnittes entsprechen. Weiterhin kann der Gurtauflageabschnitt im Wesentlichen parallel zum Basisabschnitt verfahrbar sein und/oder die Enden des Basisabschnittes können jeweils im Wesentlichen mit den Enden des Gurtaufnahmeabschnittes des Kontaktabschnittes bündig liegen, so dass beim Ausfahren des Aktuators der Teilabschnitt des Beckengurtes, der in der Aussparung liegt, vom Basisabschnitt an den Kontaktabschnitt übergeben werden kann.

Die Aussparung ist vorteilhaft auf die Form des Beckengurtes abgestimmt und kann sowohl eine Halte- bzw. Führungsfunktion des Beckengurtes übernehmen und/oder ein leichtes Einlegen des Beckengurtes ermöglichen und/oder eine optimierte Übergabe des Beckengurtes an den Kontaktabschnitt des Aktuators. Der Einbau der Vorrichtung wird somit höchstmöglich einfach und schnell durchführbar. Beim Ausfahren des Aktuators wird ein zuverlässiges und automatisches Aufnehmen (bzw. Anheben bzw. Spannen bzw. in Eingriff bringen) des Beckengurtes mittels des Kontaktabschnitts gewährleistet, so dass der Bediener keine zusätzlichen Handgriffe vornehmen muss. Durch das Übereinstimmen der Enden des Gurtauflageabschnittes und des Basisabschnittes gleitet der Gurt beim Ausfahren des Kontaktabschnittes im Moment der Übergabe sicher vom Basisabschnitt in den Gurtauflageabschnitt.

Griffelemente können an oder in dem Basiselement angeordnet sein.

Beim Ein- und Ausbau ist wichtig, dass der Bediener die Vorrichtung sicher hantieren kann, während er sich zum Ein- oder Ausbau in das Fahrzeug beugt. Die Griffelemente stellen dies sicher, da die Vorrichtung dadurch ergonomisch getragen bzw. gehalten werden kann.

Ein Aufnahmeabschnitt des Basiselements kann zur Aufnahme eines Gehäuses einer Fahrrobotersteuereinheit an der Vorrichtung angeordnet sein und/oder Befestigungseinrichtungen können mit dem Basiselement verbunden oder verbindbar sein, die zur Befestigung von Betätigungsmitteln, insbesondere von Betätigungsstangen zum Betätigen von Pedalen des Kraftfahrzeuges, vorgesehen sein können.

Dadurch kann der Fahrroboter zuverlässig, einfach und sicher auf der Vorrichtung montiert werden.

Eine erste Befestigungseinrichtung kann ein Querholm sein, der am Frontabschnitt des Basiselements befestigt sein kann. Ferner kann der Frontabschnitt des Basiselementes aus an jeweils einer Längsseite des Basiselementes schnabelförmig herausstehenden Abschnitten geformt sein, die über eine vordere Sitzkante des Fahrzeugssitzes überstehend ausgebildet sein können. Der Frontabschnitt kann Bohrungen zur Aufnahme des Querholms aufweisen.

Durch die Anordnung des Frontabschnitts liegt der Querholm nicht auf dem Fahrzeugsitz auf, sondern hängt frei im Fußraum vor dem Fahrzeugsitz. Somit können vorteilhafterweise Fahrroboterteile auch nach Einbau der Vorrichtung leicht zugänglich an die Vorrichtung angebaut und positioniert werden.

Der Aktuator kann ferner einen pneumatischen Zylinder und/oder einen aufblasbaren Fluidbalg enthalten.

Durch die Ausführung des Aktuators als hydraulischer Zylinder und/oder als aufblasbarer Fluidbalg wird eine stufenlose Verfahrbarkeit des Kontaktabschnitts auf technische einfache Weise realisiert. Dadurch ist die Vorrichtung kostengünstig in der Herstellung, kompakt und einfach bedienbar. Selbstverständlich kann auch eine Kombination z.B. bestehend aus Schieber und hydraulischem Zylinder oder dergleichen für den Aktuator vorgesehen sein.

Ein erfindungsgemäßes Verfahren zum Befestigen einer Vorrichtung mit zumindest einem der vorgehend beschriebenen Merkmale, kann die Schritte umfassen: Einsetzen der Vorrichtung zum Befestigen eines Fahrroboters auf dem Kraftfahrzeugsitz und Anlegen des Sicherheitsgurts, wobei der Brustgurt des Sicherheitsgurtes hinter der Vorrichtung verlegt werden kann und/oder der Beckengurt in die Aussparungen am Basiselement eingelegt werden kann. Ferner Auslösen des fahrzeugeigenen Arretiermittels zur Arretierung des Sicherheitsgurtes und Spannen des Sicherheitsgurtes mittels des Aktuators und/oder durch ein Verfahren der Sitzposition.

Das erfindungsgemäße Verfahren ist einfach und schnell mit wenigen Schritten ausführbar und stellt eine sichere Fixierung bzw. Befestigung der Vorrichtung auf dem Fahrzeugsitz sicher.

Weiterhin kann ein Montieren der Betätigungsmittel und Stellmittel am Basiselement vom Verfahren umfasst sein.

Weiterhin betrifft die Erfindung ein System mit einem Fahrroboter und der erfindungsgemäßen Vorrichtung.

Das System ist einfach und schnell montierbar.

Zusammenfassend hat die vorliegende Erfindung die Vorteile, dass die Vorrichtung bzw. das System schnell und einfach in ein Kraftfahrzeug eingebaut werden kann und sicher auf einem Fahrzeugsitz befestigt werden kann. Die Vorrichtung ist weiterhin ergonomisch handhabbar und kompakt und technisch einfach aufgebaut.

Bevorzugte Ausführungsformen der Erfindung werden im Folgenden exemplarisch mit Bezug auf die beigefügten Zeichnungen beschrieben. Es zeigen
- Figur 1: eine Ansicht der Vorrichtung mit dem Aktuator in erster Position,
- Figur 2: eine Ansicht der Vorrichtung mit dem Aktuator in zweiter Position,
- Figur 3: eine vergrößerte Ansicht eines Abschnitts A aus Figur 2,
- Figur 4: eine weitere Ausgestaltung der Vorrichtung, und
- Figur 5: eine Ansicht der Vorrichtung mit Fahrroboter.

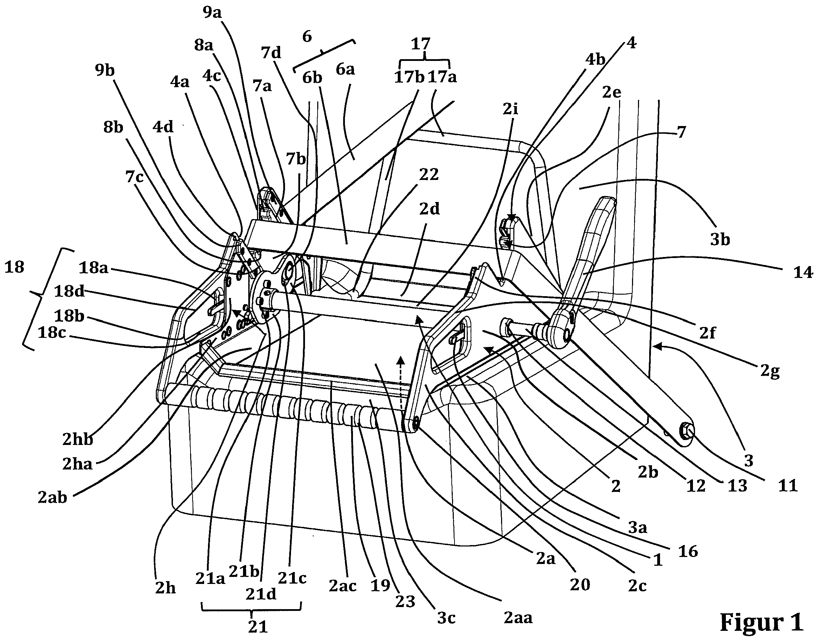

Figur 1 zeigt einen Aktuator 1, der einen mechanischen Schieber 7 enthält. Das Basiselement 2 weist eine im Wesentlichen rechteckig geformte Sitzkontaktfläche 2a auf, die aus einem zentralen Abschnitt 2aa, der plattenförmig, flächig ausgeführt ist, und zwei geneigten Abschnitte 2ab aufgebaut ist. Jeweils ein geneigter Abschnitt 2ab ist an einer Längsseite des zentralen Abschnitts 2aa angeordnet. Die geneigten Abschnitte 2ab weisen jeweils eine gleiche Neigung auf und sind in Richtung weg von einer Sitzfläche 3a eines Fahrzeugsitzes 3 gebogen. Der zentrale Abschnitt 2aa ist einstückig mit den geneigten Abschnitten 2ab gezeigt.

Ferner weist die Sitzkontaktfläche 2a eine Vorderkante 2ac auf, die einstückig mit der Sitzkontaktfläche 2a ausgeführt ist. Die Vorderkante 2ac wird durch einen nach oben gebogenen Abschnitt der Sitzkontaktfläche 2a gebildet.

Die Sitzkontaktfläche 2a kann eine größere Breite als Länge aufweisen, wobei die Abmessungen der Sitzkontaktfläche 2a im Wesentlichen den Abmessungen der Sitzfläche 3a eines Fahrzeugsitzes 3 entsprechen, so dass die Vorderkante 2ac der Sitzkontaktfläche 2a im Wesentlichen bündig mit einer vorderen Sitzkante 3c des Sitzes 3 anliegen kann.

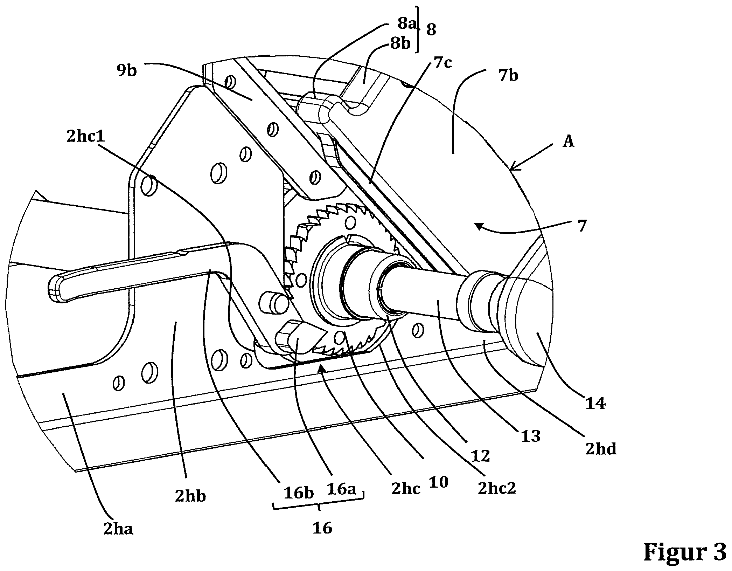

An die Sitzkontaktfläche 2a des Basiselementes 2 schließen sich einstückig mit der Sitzkontaktfläche 2a verbundene Befestigungsabschnitte 2h an. Dabei ist jeweils ein Befestigungsabschnitt 2h längsseitig mit dem entsprechenden geneigten Bereich 2ab verbunden. Die Befestigungsabschnitte 2h stehen über die gesamte Länge der Längsseite der Sitzkontaktfläche 2a vertikal mit wechselnder Höhe aus einer Ebene parallel zur Sitzkontaktfläche 2a heraus. Dabei weist jeder Befestigungsabschnitt 2h in der Nähe zur Vorderkante 2ac einen niedrigen ersten Abschnitt 2ha auf, der eine konstante Höhe aufweist. An den ersten Abschnitt 2ha schließt sich einstückig der zweite Abschnitt 2hb an, der rechteckförmig mit dreickförmigen Abschluss höher als der erste Abschnitt 2ha ausgebildet ist. Am Fuß des zweiten Abschnittes 2hb auf der Seite des zweiten Abschnittes 2hb, die gegenüber der Vorderkante 2ac angeordnet ist, schließt sich ein Aussparungsabschnitt 2hc an. Der Aussparungsabschnitt 2hc (Figur 3) hat eine geringere Höhe als der erste Abschnitt 2ha, wobei eine erste Seitenwand 2hc1 des Aussparungsabschnittes 2hc halbkreisförmig im Fußbereich des zweiten Abschnittes 2hb ausgebildet ist und eine zweite Seitenwand 2hc2 des Aussparungsabschnittes 2hc im Wesentlichen einen Viertelradius beschreibt. An den Aussparungsabschnitt 2hc schließt sich dann ein dritter Abschnitt 2hd an, der wieder eine konstante Höhe aufweist und bis zu einem Endabschnitt 2d des Basiselementes 2 verläuft.

Der Befestigungsabschnitt 2h weist ferner eine Vielzahl an Durchgangsbohrungen auf.

Mit dem Basiselement 2 sind insgesamt zwei seitliche Abschnitte 2b verbunden, die jeweils längsseitig der Sitzkontaktfläche 2a aus einer Ebene parallel zur Sitzkontaktfläche 2a herausstehen und dabei im Wesentlichen vertikal entlang der im Wesentlichen gesamten Länge der Sitzkontaktfläche 2a herausstehen. Die seitlichen Abschnitte 2b sind mittels Schraubverbindungen, die von den Durchgangsbohrungen aufgenommen werden, mit dem jeweiligen Befestigungsabschnitt 2h verbunden.

Die Sitzkontaktfläche 2a wird somit längsseitig von den seitlichen Abschnitten 2b begrenzt und eingeschlossen. Die Sitzkontaktfläche 2a und die seitlichen Abschnitte 2b sind mehrstückig ausgeführt gezeigt, können jedoch auch einstückig ausgeführt sein. Alternative Verbindungstechniken bei der mehrstückigen Ausführung können z.B. Schweißen und Kleben einschließen.

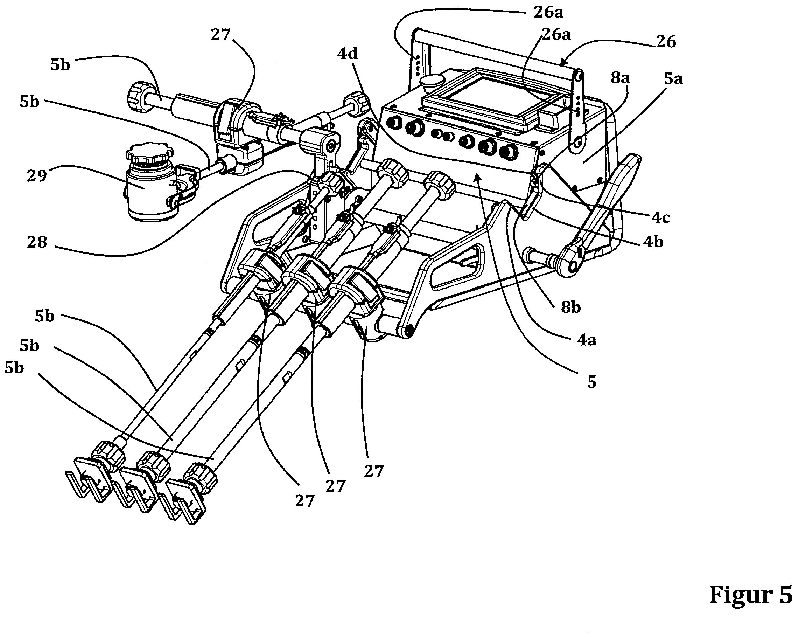

Der Endabschnitt 2d des Basiselements 2 ist ein Abschnitt des Basiselements 2, der in Richtung der Lehnenfläche 3b des Sitzes 3 angeordnet ist, wenn die Vorrichtung auf dem Sitz 3 befestigt ist. Die seitlichen Abschnitte 2b weisen im Bereich des Endabschnittes 2d eine erste schiefe Ebene 2e auf, d.h. die Höhe der seitlichen Abschnitte 2b nimmt mit zunehmendem Abstand von dem Endabschnitt 2d zu. Die erste schiefe Ebene 2e endet auf einer maximalen Höhe der seitlichen Abschnitte 2b, so dass die maximale Höhe der seitlichen Abschnitte 2b im Wesentlichen einer Höhe eines Steuergehäuses 5a (Gehäuse einer Steuereinrichtung) eines Fahrroboters 5 (Figur 5) entspricht.

An die erste schiefe Ebene 2e schließt sich eine schiefe Ebene 2f an, die vom Endabschnitt 2d aus gesehen eine negative Steigung aufweist, so dass mit zunehmendem Abstand von dem Endabschnitt 2d die Höhe der seitlichen Abschnitte 2b über die zweite schiefe Ebene 2f abnimmt. Der zweite Abschnitt 2hb ist unterhalb der zweiten schiefen Ebene 2f montiert und eine Seitenkante des zweiten Abschnittes 2hb schließt im Wesentlichen bündig mit einem Teil der zweiten schiefen Ebene 2f ab.

Bei ca. der Hälfte der Seitenlänge des Basiselements 2, d.h. auf halbem Weg zwischen Endabschnitt 2d und Vorderkante 2ac, schließt sich an die zweite schiefe Ebene 2f eine dritte schiefe Ebene 2g an, die ebenfalls vom Endabschnitt 2d aus gesehen eine negative Steigung aufweist, die Steigung ist jedoch kleiner als die der zweiten schiefen Ebene 2f. Der Übergang vom ersten Abschnitt 2ha auf den zweiten Abschnitt 2hb liegt dabei kongruent zum Übergang zwischen der zweiten schiefen Ebene 2f und der dritten schiefen Ebene 2g. Die seitlichen Abschnitte 2b können auch jede andere zweckdienliche Form aufweisen.

Im Bereich der zweiten schiefen Ebene 2f ist eine Aussparung 4 in dem seitlichen Abschnitt 2b angeordnet. Die Aussparung 4 weist einen zweiten Randabschnitt 4a auf, der im Wesentlichen parallel zur Verfahrrichtung des Schiebers 7 verläuft. Der zweite Randabschnitt 4a kann parallel zur Längsachse des Teils des Sicherheitsgurtes 6 ausgebildet sein, der zwischen Gurtbefestigungsposition 11 und Aussparung 4 angeordnet ist. An den zweiten Randabschnitt 4a schließt sich mit einem Winkel von im Wesentlichen 90° ein Basisabschnitt 4b an, dessen Länge im Wesentlichen mit einer Breite eines Beckengurtes 6a eines Sicherheitsgurtes 6 des Sitzes 3 übereinstimmt. Mit einem Winkel von im Wesentlichen größer als 90° schließt sich an den Basisabschnitt 4b ein erster Randabschnitt 4c an, der in einem auf den Sitz 3 aufgesetzten Zustand des Basiselementes 2 im Wesentlichen vertikal verläuft, d.h. im Wesentlichen 90° zur Sitzkontaktfläche 2a verläuft. Durch diese Ausrichtung des ersten Randabschnittes 4c kann ein einfaches und sicheres Einführen des Gurtes 6 von oben bzw. vorne/oben gewährleistet werden.

Der Basisabschnitt 4b kann weiterhin derart ausgerichtet sein, dass seine Flächennormale im Wesentlichen in Richtung der Gurtbefestigungspostionen 11 am Boden des Fahrgastraums weist. Dadurch ist eine gleichmäßige Auflage des Gurtes 6 auf dem Basisabschnitt 4b gewährleistet. Weiterhin werden eventuellen Faltenbildungen des Gurtes 6 vermindert, die einen sicheren Sitz des Gurtes 6 in der Aussparung 4 und ein einfaches Einlegen des Gurtes 6 erschweren könnten.

Ferner sind die Seitenabschnitte 2b mit einer Stufenaussparung 4d zur Führung der Schieber 7 versehen.

Die Oberflächen des zweiten Randabschnittes 4a, des Basisabschnittes 4b und/oder des ersten Randabschnittes 4c können weiterhin derart behandelt sein, dass ein leichtes Gleiten des Gurtes darauf bzw. in der Aussparung gewährleistet ist. Die Oberflächenbehandlung kann z.B. in einem Beschichten mit gleitförderndem Material bestehen, z.B. Teflon.

Im vorderen Bereich der dritten schiefen Ebene 2g schließt sich jeweils ein Frontabschnitt 2c an, der einstückig mit dem jeweiligen seitlichen Abschnitt 2b ausgeführt ist. Wenn die Vorrichtung auf dem Sitz 3 befestigt ist, kann der Frontabschnitt 2c über die vordere Sitzkante 3c hinausstehen. Der Frontabschnitt 2c ist dabei als schnabelförmige Verlängerungen des jeweiligen seitlichen Abschnittes 2b mit übereinstimmender Wandstärke geformt und eine Spitze des schnabelförmigen Frontabschnittes 2c zeigt in Richtung eines Bodens eines Fußraums des Kraftfahrzeuges. Der Boden des Fußraumes und das Kraftfahrzeug sind nicht gezeigt. Alternativ können gesonderte Frontabschnitte 2c aber auch über eine geeignete Verbindungstechnik mit den seitlichen Abschnitten 2b verbunden werden.

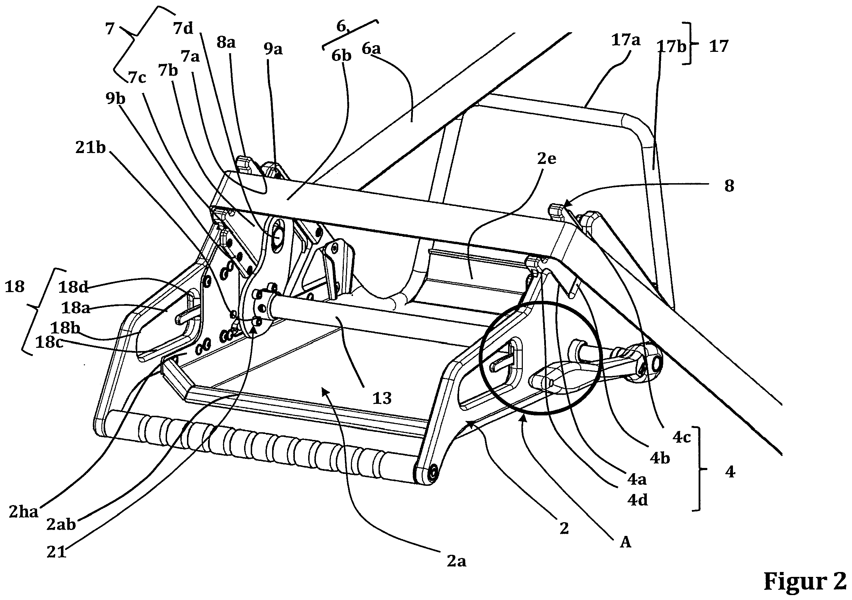

Figuren 1 und 2 zeigen die zwei Schieber 7 des Aktuators 1 und den in den Aussparungen 4 bzw. Kontaktabschnitten 8 eingelegten Sicherheitsgurt 6, der einen Brustgurt 6a und einen Beckengurt 6b aufweist. Der Gurt 6 ist in eingelegter und angeschnallter Position gezeigt. Figur 1 zeigt die Schieber 7 in einer ersten Position und Figur 2 zeigt die Schieber 7 in einer Gurtspannposition.

Ferner zeigen beide Figuren 1,2 den Aufbau des Schiebers 7, der einen Kontaktabschnitt 8 aufweist, der zur Aufnahme des Beckengurtes 6b dient. Der Kontaktabschnitt 8 ist im Wesentlichen aus zwei Randabschnitten 8a und einem Gurtauflageabschnitt 8b gebildet. Die Randabschnitte 8a stehen jeweils seitlich des Gurtauflageabschnittes 8b über den Gurtauflageabschnitt 8b heraus. Die Länge des Gurtauflageabschnittes 8b ist an die Breite des Beckengurtes 6b eines Kraftfahrzeuges und an den Basisabschnitt 4b der Aussparung 4 angepasst. Die Randabschnitte 8a sind ferner im Wesentlichen halbkreisförmig abgeschlossen.

Die Randabschnitte 8a haben ferner die Funktion einer sicheren Übernahme des Beckengurtes 6b vom Basisabschnitt 4b in den Kontaktabschnitt 8, wenn der Kontaktabschnitt 1 von der ersten Position in die Gurtspannposition ausgefahren wird. Die Randabschnitte 8a sind dazu mit großem Radius versehen, der ein leichtes Eingleiten des Gurtes 6 in den Kontaktabschnitt 8 auf den Gurtauflageabschnitt 8b unterstützt bzw. ermöglicht. Dadurch wird ein automatisches Spannen des Gurtes 6 beim Ausfahren der Kontaktabschnitte 8 ohne weitere Handgriffe ermöglicht.

Die Schieber 7 sind derart winklig an der jeweiligen Innenseite der seitlichen Abschnitte 2b, d.h. der Seite, die in Richtung der Sitzkontaktfläche 2a zeigt, angeordnet, dass die Schieber 7 beim Ausfahren im Wesentlichen parallel zur ersten schiefen Ebene 2e, zum zweiten Randabschnitt 4a und parallel zur Innenseite des seitlichen Abschnittes 2b verfahren.

Figur 1 zeigt, dass der Gurtauflageabschnitt 8b in der ersten Position eben und bündig zum Basisabschnitt 4b der Aussparung 4 aufliegt. Die erste Position kann aber auch derart ausgeführt sein, dass der Gurtauflageabschnitt 8b unterhalb des Basisabschnittes 4b angeordnet ist, wenn der Kontaktabschnitt 8 in der ersten, eingefahrenen Position ist. Die Längen des Basisabschnittes 4b und des Gurtauflageabschnittes 8b sind dabei im Wesentlichen gleich lang und beide Abschnitte (Basisabschnitt 4b und Gurtauflageabschnitt 8b) sind kongruent zueinander angeordnet, d.h. die Enden der beiden Abschnitte sind übereinstimmend zueinander angeordnet. Der Basisabschnitt 4b und der Gurtauflageabschnitt 8b sind zudem derart angeordnet, dass sie parallel zueinander verfahren, wenn der Aktuator 1 verfahren wird. Die Anordnung des Gurtauflageabschnittes 8b und des Basisabschnittes 4b zueinander ermöglicht eine perfekte Übergabe des Beckengurtes 6b vom Basisabschnitt 4b auf den Gurtauflageabschnitt 8b, wenn der Kontaktabschnitt 8 aus der ersten Position bei in den Aussparungen 4 eingelegtem Beckengurt 6b in die Gurtspannposition verfahren wird.

Die Schieber 7 sind im Wesentlichen rechteckförmig. An einem Ende jedes Schiebers 7 weist der Schieber 7 dabei den Kontaktabschnitt 8 auf. Die Schieber 7 weisen eine Wandstärke auf, die etwas geringer ist als die Wandstärke der seitlichen Abschnitte 2b und die im Wesentlichen der Tiefe der Stufenaussparung 4d entspricht, in die der jeweilige Schieber 7 an dem jeweiligen seitlichen Abschnitt 2b eingesetzt und gelagert ist.

Die in die Stufenaussparungen 4d eingesetzten Schieber 7 werden jeweils an einem Seitenabschnitt 7a über eine lange Schiene 9a parallel zum seitlichen Abschnitt 2b geführt. Die lange Schiene 9a ist parallel unterhalb der ersten schiefen Ebene 2e mit dem jeweiligen seitlichen Abschnitt 2b mittels Schraubverbindung verbunden ist. Ein Teil der langen Schiene 9a steht dabei über die Stufenaussparung 4d hinaus, so dass ein flächiger Kontakt mit dem Schieber 7 im Bereich des Seitenabschnittes 7a gebildet wird. Die Stufenaussparung 4d und die lange Schiene 9a formen somit eine Nut, in der der Seitenabschnitt 7a des Schiebers 7 gleitend geführt wird.

Die dem Seitenabschnitt 7a gegenüberliegende Längsseite jedes Schiebers 7 ist als linearer Zahnabschnitt 7c ausgeführt. Auf der Seite des linearen Zahnabschnittes 7c wird der Schieber 7 von einer kurzen Schiene 9b geführt, die mit einem Ende bündig mit der zweiten schiefen Ebene 2f anliegt und mit dem anderen Ende bis kurz vor ein nierenförmiges Führungselement 21 verläuft. Eine Längsseite der kurzen Schiene 9b verläuft parallel oberhalb zu einem Bereich des zweiten Abschnittes 2hb des Befestigungsabschnittes 2h. Die andere Längsseite der kurzen Schiene 9b bildet mit der Stufenaussparung 4d eine Nut, in der die Zähne des linearen Zahnabschnittes 7c gleitend gelagert sind.

Ein Gleitlager 12 ist jeweils in beiden seitlichen Abschnitten 2b unterhalb der Aussparung 4 vorgesehen. Die Durchgangsbohrungen für die Aufnahme der Gleitlager 12 sind in den seitlichen Abschnitten 2b jeweils im Bereich oberhalb des Aussparungsabschnittes 2hc vorgesehen.

Die Gleitlager 12 lagern eine durchgängige Welle 13 drehbar. Die drehbar gelagerte Welle 13 ist rechtwinklig zu den Längsseiten des Basiselementes 2 geführt. Auf der Längsseite des Basiselementes 2, die nach der Befestigung der Vorrichtung in Richtung eines Beifahrersitzes des Kraftfahrzeuges zeigt, schließt die Welle 13 bündig mit einer Außenfläche des seitlichen Abschnittes 2b ab und ist dort im Lager 12 mit einer Schraubverbindung gegen seitliches Verrutschen gesichert. Auf der gegenüberliegenden Seite des seitlichen Abschnittes 2b steht die Welle 13 aus dem seitlichen Abschnitt 2b heraus. Am herausstehenden Ende der Welle 13 ist ein Bedienhebel 14 mittels einer Presspassung fest montiert. Die Verbindung kann jedoch auch eine Schweiß-, Klebe- oder Schraubverbindung sein.

Wie aus Figur 3 ersichtlich hält die drehbar in den seitlichen Abschnitten 2b gelagerte Welle 13 jeweils an der Innenseite der seitlichen Abschnitte 2b anliegend ein Zahnradelement 10. Die Zahnradelemente 10 sind drehfest auf der Welle montiert und stehen in Zahneingriff mit dem jeweiligen linearen Zahnabschnitt 7c der Schieber 7. Die Zahnradelemente 10 können jedoch auch entfernt von der Innenseite der seitlichen Abschnitte 2b angeordnet sein, solange diese in Zahneingriff mit dem linearen Zahnabschnitt 7c stehen.

Figuren 1 und 2 zeigen die nierenförmigen Führungselemente 21, die innerhalb der beiden Zahnradelemente 10 auf der Welle 13 fest gelagert sind. Dazu weisen die nierenförmigen Führungselemente 21 eine erste Öffnung 21a auf. Die nierenförmigen Führungselemente 21 sind mittels einer Schraubverbindung drehfest auf der Welle 13 gelagert.

Die nierenförmigen Führungselemente 21 sind plattenförmig, flächig ausgeführt und weisen um die Öffnung 21a herum einen größeren Abschnitt 21b auf, der die Zahnradelemente 10 vollständig verdeckt, d.h. der Radius der Zahnradelemente 10 ist kleiner als der des Abschnittes 21b.

Ein kleinerer Abschnitt 21c steht flächig in Kontakt mit dem Hauptabschnitt 7b des Schiebers 7. Ferner weist der Schieber 7 am Hauptabschnitt 7b ein vorstehendes Führungsmittel 7d auf, das in eine zweite Öffnung 21d des nierenförmigen Führungselementes 21 hineinragt. Die zweite Öffnung 21d wird durch zwei halbkreisförmige Radien begrenzt und verläuft mit einem rechteckförmigen Mittelabschnitt, der zwischen den beiden Radien liegt, vertikal zu der Sitzkontaktfläche 2a.

Beim Bedienen des Bedienhebels 14 wird die Welle 13 mit den Zahnradelementen 10 und den nierenförmigen Führungselementen 21 rotiert. Über den Zahneingriff wird durch die Rotation der Welle 13 der Schieber 7 aktuiert, wobei die Rotation bei der Übertragung auf den linearen Zahnabschnitt 7c in eine Translation des Schiebers 7 gewandelt wird. Anstatt einer Zahnverbindung zum Übertragen der Rotation auf den Schieber 7 ist z.B. auch eine reibschlüssige Verbindung möglich, so dass die Zahnradelemente 10 Reibradelemente sein müssten und der lineare Zahnabschnitt 7c ein Reibabschnitt sein müsste.

Beim Aus- bzw. Einfahren des Schiebers 7 wird das vorstehende Führungsmittel 7d innerhalb der zweiten Öffnung 21d durch die Rotation des nierenförmigen Führungselementes 21 geführt. Dadurch wird eine zusätzliche Translationskraft auf den Schieber 7 ausgeübt.

Figur 3 zeigt ein Feststellelement 16 das drehbar zwischen dem Befestigungsabschnitt 2h und dem seitlichen Abschnitt 2b angeordnet ist. Das Feststellelement 16 ist mit einer Durchgangsbohrung drehbar auf einem Stift gelagert, der mit einem Ende im zweiten Abschnitt 2hb des Befestigungsabschnittes 2h und mit dem anderen Ende im seitlichen Abschnitt 2b befestigt ist. Der seitliche Abstand zwischen der Welle 13 und dem Festellelement 16 entspricht der Länge eines vorderen zahnförmigen Abschnittes 16a des Festellelementes 16, so dass dieser in Zahneingriff mit dem Zahnradelement 10 gebracht werden kann.

Ein Hebelabschnitt 16b des Feststellelementes 16 hat im Wesentlichen die Form entsprechend zweier Uhrzeiger, die ca. 16.45 Uhr anzeigen. Der kürzere Teil des Hebelabschnittes 16b umfasst dabei einstückig den vorderen zahnförmigen Abschnitt 16a. Die Drehachse des Festellelementes 16 liegt im Bereich des kürzeren Teils des Hebelabschnittes 16b. Der längere Teil des Hebelabschnittes 16b steht mit einem Ende über den zweiten Abschnitt 2hb über. Die seitlichen Abschnitte 2b sind im Bereich des Feststellelementes 16 ausgespart, so dass ein Aufnahmeraum zwischen dem seitlichen Abschnitt 2b und dem Befestigungsabschnitt 2f geformt wird.

Die Verzahnung des Zahnradelementes 10 ist so ausgeführt, dass der vordere zahnförmige Abschnitt 16a des Festellelements 16 im Zahneingriff mit dem Zahnradelement 10 eine Rotationsrichtung der Welle 13 sperrt und die entgegengesetzte Rotationsrichtung zulässt.

Durch Bedienen des Feststellelementes 16 wird die Rotation der Welle 13 in eine Richtung gesperrt (Zahneingriff) oder in beide Richtungen freigegeben (Zahneingriff gelöst/aufgehoben).

Figur 1 zeigt weiterhin ein Rückenlehnenelement 17, das aus einem L-förmig gebogenen Rundrohr 17b besteht. Die beiden Enden des Rundrohres zeigen dabei in die gleiche Richtung, so dass zwei L-Abschnitte bestehen, die über eine Querverbindung 17a verbunden sind. Die beiden Enden des Rundrohres 17b sind jeweils mit einer Aufnahmeöffnung 22, die am Endabschnitt 2d des Basiselements 2 angeordnet sind verbunden. Die beiden Enden des Rohres 17b sind dabei in die Aufnahmeöffnungen 22 eingeführt und darin fixiert.

Ferner sind aus Figur 1 Griffelemente 18 ersichtlich. Die Griffelemente 18 sind jeweils unterhalb der dritten schiefen Ebene 2g als Aussparungen in den seitlichen Abschnitten 2b angeordnet. Die Griffelemente 18 weisen einen größeren Radius 18a und einen kleineren Radius 18b auf, die zueinander gegenüberliegend angeordnet sind und im Wesentlichen halbkreisförmig sind. Jeweils ein im Wesentlichen gerader Verbindungsabschnitt 18c,d verbindet jeweils ein Radiusende des größeren und des kleineren Radius' 18a,b miteinander. Dabei verläuft der untere Verbindungsabschnitt 18c mit Bezug zur Sitzkontaktfläche 2a parallel zur Sitzkontaktfläche 2a und der untere Verbindungsabschnitt 18c mit Bezug zu Sitzkontaktfläche 2a verläuft parallel zur dritten schiefen Ebene 2g. Eine abweichende Form der Ausnehmungen bzw. der Griffelemente 18 ist möglich.

Das Feststellelement 16 ragt mit einem Teil des Hebelabschnittes 16b in die Griffelemente 18 hinein.

Figur 1 zeigt weiterhin einen Querholm 19, der zwischen den Frontabschnitten 2c des Basiselementes 2 unterhalb der Sitzkontaktfläche 2a und parallel in einem Abstand zur vorderen Sitzkante 3c des Sitzes 3 verläuft. Der Querholm 19 wird in Bohrungen 20 der Frontabschnitte 2c fest gehalten.

Der Querholm 19 weist eine Vielzahl Einkerbungen 23 auf, die vertikal zur Querholmachse um den Umfang des Querholms 19 herum verlaufen. Die Form der Einkerbungen 23 in einer radialen Schnittebene des Querholms 19 ist dabei V-förmig. Eine andere Formgebung und eine beliebige Anzahl von Einkerbungen 23 sind ausführbar. Die Einkerbungen 23 dienen der leichten und verschiebegesicherten Montage von Fahrroboterteilen.

Nicht gezeigt ist eine Rutschkupplung, die an der Welle befestigt sein kann, so dass das Verfahren der Schieber 7 auch bei fortgesetzter Bedienung des Hebels 14 über die Gurtspannposition hinaus verhindert werden kann.

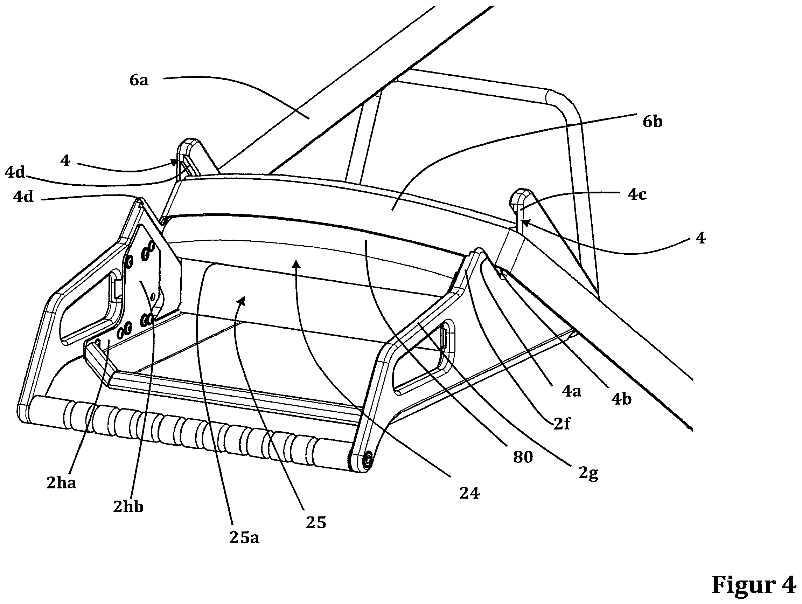

Figur 4 zeigt den Aktuator 1, der einen Fluidbalg 24 anstatt des Schiebers 7 enthält. Hierbei entfallen zudem die Lager 12, die Welle 13, der Hebel 14, die Schienen 9a, 9b, die Zahnradelemente 10, die Festellelemente 16 und die nierenförmigen Führungselemente 21.

Der Fluidbalg 24 ist auf einer Querschiene 25 fest gelagert, die die beiden seitlichen Abschnitte 2b senkrecht auf der Höhe der Aussparungen 4 verbindet. Ein oberer Abschnitt 25a der Querschiene 25 ist bündig eben mit dem Basisabschnitt 4b der Aussparungen 4 angeordnet. Auf dem oberen Abschnitt 25a ist der Fluidbalg 24 befestigt.

Der Fluidbalg 24 ist im Wesentlichen quaderförmig. Der Kontaktabschnitt 80 ist jedoch nicht eben, sondern wölbt sich mittig stärker, so dass der Kontaktabschnitt 80 einen Kreisbogen beschreibt. Auf dem Kontaktabschnitt 80 ist wie dargestellt der Beckengurt 6b geführt, der der seitlich des Fluidbalges 24 von den Aussparungen 4 geführt wird. Durch eine Fluidpumpe, die nicht gezeigt ist und die eine Luftpumpe sein kann, wird der Fluidbalg 24 aufgepumpt, so dass der Beckengurt 6b gespannt wird.

Der Brustgurt 6a verläuft, wie auch in den Figuren 1,2 gezeigt, an der Lehnenfläche 3b des Sitzes 3 entlang, d.h. hinter der Vorrichtung.

Nicht gezeigt ist eine Querführung des Beckengurtes 6b, die als seitliche Wandabschnitte der Querschiene 25 ausgeführt ist. Die seitlichen Wandabschnitte stehen jeweils unter- bzw. oberhalb der Seitenkanten des Beckengurtes 6b aus dem oberen Abschnitt 25a der Querschiene 25 heraus. Dabei sind die Wandabschnitte höher ausgeführt als die maximale Höhe des Kontaktabschnittes 80, die durch Aufpumpen des Balges 24 erreichbar ist.

Weiterhin kann der Aktuator einen pneumatischen Zylinder (nicht gezeigt) aufweisen. Der pneumatische Zylinder weist ebenfalls einen Kontaktabschnitt auf. Der pneumatischen Zylinder ist mittig auf der Sitzkontaktfläche 2a montiert, so dass der Kontaktabschnitt fluchtend mit den beiden Aussparungen 4 angeordnet ist. Der Beckengurt 6b wird dabei in den beiden Aussparungen 4 und dem Kontaktabschnitt geführt. Der Kontaktabschnitt wird durch Betätigung einer pneumatischen Steuereinrichtung verfahren.

Die pneumatische Steuereinrichtung umfasst eine Fluidleitung zum pneumatischen Zylinder mit einem Rückschlagventil. Eine Pumpe beaufschlagt den pneumatischen Zylinder über die Fluidleitung mit dem benötigten Druck.

Die Gurtspannposition kann über einen vorbestimmten Druck im pneumatischen Zylinder definiert werden.

Figur 5 zeigt die Vorrichtung mit einem montierten Fahrroboter 5. Das Gehäuse 5a der Robotersteuerungseinrichtung ist bündig zum Endabschnitt 2d in einem Aufnahmeabschnitt 2i des Basiselementes befestigt. Der Aufnahmeabschnitt 2i ist zwischen der Welle 13 und dem Endabschnitt 2d angeordnet. Am Gehäuse 5a ist ein Tragegriff 26 angeordnet, der quer oberhalb des Gehäuses verläuft und seitlich mittels zweier Arme 26a am Gehäuse 5a befestigt ist.

Am Querholm 19 sind drei Klemmmittel 27 klemmend in den Einkerbungen 23 fest montiert. Die Klemmmittel 27 weisen eine Klemmöffnung auf, in die Betätigungsmittel 5b des Roboters 5 eingelegt werden können und durch Querschnittsverjüngung in den Klemmmitteln 27 festgeklemmt werden können. Die Betätigungsmittel 5b sind Betätigungsstangen mittels derer die Pedale des Kraftfahrzeuges betätigt werden können.

Ferner ist auf der dem Beifahrersitz zugewandten Seite innenwändig am zweiten Abschnitt 2hb des Befestigungsabschnittes 2h eine Aufnahmeeinheit 28 befestigt, die zwei Betätigungsmittel 5b hält. Dabei sind die Betätigungsmittel 5b mittels eines Klemmmittels 27 kreuzend orthogonal zueinander angeordnet. Am im Wesentlichen parallel zum Basiselement 2 angeordneten Betätigungsmittel 5b ist eine Schalteinheit 29 am vorderen Ende montiert, die in Eingriff mit dem Schalthebel des Kraftfahrzeuges gebracht werden kann, um Schaltvorgänge automatisch durchführen zu können.

Die beschriebenen Merkmale der beiden Ausführungsbeispiele können soweit für den Fachmann ausführbar beliebig miteinander kombiniert werden.

Zusammenfassend hat die vorliegende Erfindung die Vorteile, dass eine einfache und schnelle Befestigung bzw. Einbau der Vorrichtung in ein Kraftfahrzeug ermöglicht wird. Dies ist unter anderem dadurch ermöglicht, dass die fahrzeugeigene Arretiervorrichtung des Sicherheitsgurtes 6 zur Fixierung verwendet wird und durch die sinnvolle Anordnung der Aussparungen 4. Dadurch dass der erste Randabschnitt 4c im Wesentlichen vertikal zur Sitzfläche 3a verläuft, gleitet der Beckengurt 6b nahezu selbsttätig beim Anlegen des Sicherheitsgurtes 6 in die Aussparungen 4. Der Basisabschnitt 4b ist derart ausgerichtet, dass seine Flächennormale im Wesentlichen in Richtung der Gurtbefestigungspostionen 11 am Boden des Fahrgastraums weist. Der Basisabschnitt 4b ist im Wesentlichen senkrecht zu einer Beckengurtquerachse angeordnet, so dass der Gurt 6 flächig und eben mit dem Basiselement 4b der Aussparung 4 verläuft. Dies vereinfacht, dass Einlegen des Gurtes 6 weiterhin, da keine Falten und kein Verrutschen des Gurtes 6 störend auftreten. Die Kontaktabschnitte 8 sind derart zu den Aussparungen 4 positioniert, dass die Übergabe des Beckengurtes 6b von dem Basisabschnitt 4b auf den Gurtauflageabschnitt 8b automatisch und ohne zusätzliche Handgriffe erfolgt, wenn der Kontaktabschnitt 8 aus der ersten Position heraus in die Gurtspannposition verfahren wird. Die Form der Kontaktabschnitte 8 gewährleistet eine sichere Führung des Beckengurtes 6b und somit eine sichere Fixierung der Vorrichtung auf dem Kraftfahrzeugsitz. Ferner, da keine zusätzlichen Arretiervorrichtungen an der Vorrichtung vorgesehen sein müssen, ist die erfindungsgemäße Vorrichtung kompakt. Die Gurte 6 werden nicht durch zusätzliche Klemm- oder Arretiervorrichtungen beschädigt.
1 Aktuator
2 Basiselement
2a Sitzkontaktfläche
2aa Zentraler Abschnitt
2ab geneigter Abschnitt
2b Seitlicher Abschnitt
2c Frontabschnitt
2d Endabschnitt
2e 1. schiefe Ebene
2f 2. schiefe Ebene
2g 3. schiefe Ebene
2h Befestigungsabschnitt
2ha Erster Abschnitt
2hb Zweiter Abschnitt
2hc Aussparungsabschnitt
2hc1 Erste Seitenwand
2hc2 Zweite Seitenwand
2hd Dritter Abschnitt
2i Aufnahmeabschnitt
3 Sitz
3a Sitzfläche
3b Lehnenfläche
3c Vordere Sitzkante
4 Aussparung
4a Zweiter Randabschnitt
4b Basisabschnitt
4c Erster Randabschnitt
4d Stufenaussparung
5 Fahrroboter
5a Gehäuse (der Steuereinrichtung des Fahrroboters)
5b Betätigungsmittel
6 Sicherheitsgurt
6a Brustgurt
6b Beckengurt
7 Schieber
7a Seitenabschnitt
7b Hauptabschnitt
7c Zahnabschnitt
7d Vorstehendes Führungsmittel
8; 80 Kontaktabschnitt
8a Randabschnitt
8b Gurtauflageabschnitt
9a lange Schiene
9b kurze Schiene
10 Zahnradelement
11 Gurtbefestigungsposition(en)
12 Lager
13 Welle
14 Hebel
16 Feststellelement
16a vorderer Zahnabschnitt
16b Hebelabschnitt
17 Rückenlehnenelement
17a Querverbindung
17b L-förmiges Rundrohr
18 Griffelement
18a größerer Radius
18b kleinerer Radius
18c unterer, gerader Verbindungsabschnitt
18d oberer, gerader Verbindungsabschnitt
19 Querholm
20 Bohrung
21 Nierenförmiges Führungselement
21a Erste Öffnung
21b Größerer Abschnitt
21c Kleinerer Abschnitt
21d Zweite Öffnung
22 Aufnahmeöffnung
23 Einkerbung
24 Fluidbalg
25 Querschiene
25a Oberer Abschnitt
26 Trage(griff)
26a Arme
27 Klemmmittel
28 Aufnahmeeinheit
29 Schalteinheit

## Patentansprüche

1. Eine Vorrichtung zum Befestigen eines Fahrroboters in einem Kraftfahrzeug, die mittels eines Sicherheitsgurtes (6) auf einem Fahrzeugsitz (3) fixierbar ist, mit
- einem Basiselement (2), das auf einer Fahrzeugsitzfläche (3a) auflegbar ist, wobei das Basiselement (2) derart ausgestaltet ist, dass ein Fahrroboter daran befestigbar ist, und
- zumindest einem mit dem Basiselement (2) in Kontakt stehender Aktuator (1) zum Spannen des Sicherheitsgurtes (6),
**gekennzeichnet dadurch, dass**
der Aktuator (1) einen ausfahrbaren Kontaktabschnitt (8) enthält, der in Kontakt mit dem arretierten Sicherheitsgurt (6) bringbar ist, wobei der ausfahrbare Kontaktabschnitt (8) des Aktuators (1) zum Spannen des arretierten Sicherheitsgurtes (6) vom Basiselement (2) wegbewegbar ist.

2. Die Vorrichtung nach Anspruch 1, **gekennzeichnet dadurch, dass** der ausfahrbare Kontaktabschnitt (8), wenn in Kontakt mit dem arretierten Sicherheitsgurt (6) stehend, zwischen dem Sicherheitsgurt (6) und dem Basiselement (2) angeordnet ist und zum Spannen des Sicherheitsgurtes (6) ein Abstand zwischen dem Kontaktabschnitt (8) und dem Basiselement (2) vergrößert wird, so dass die Vorrichtung auf dem Fahrzeugsitz (2) fixiert wird.

3. Die Vorrichtung nach zumindest einem der vorangegangenen Ansprüche, **gekennzeichnet dadurch, dass** der Aktuator (1) einen mechanisch angetriebenen Schieber (7) enthält.

4. Die Vorrichtung nach zumindest einem der vorangegangenen Ansprüche, **gekennzeichnet dadurch, dass** der ausfahrbare Kontaktabschnitt (8) des Aktuators (1) zwischen einer ersten und einer zweiten Position verfahrbar ist, wobei
die erste Position eine Position ist, in der der ausfahrbare Kontaktabschnitt (8) am nächsten zum Basiselement (2) angeordnet ist, und
die zweite Position eine Position ist, in der der ausfahrbare Kontaktabschnitt (8) am weitesten entfernt vom Basiselement (2) angeordnet ist.

5. Die Vorrichtung nach zumindest einem der vorangegangenen Ansprüche, **gekennzeichnet dadurch, dass** der ausfahrbare Kontaktabschnitt (8) des Aktuators (1) in eine Gurtspannposition verfahrbar ist, wobei
die Gurtspannposition einer Position des ausfahrbaren Kontaktabschnitts (8) entspricht, in der der Aktuator (1) eine vorbestimmte Kraft ausübt.

6. Die Vorrichtung nach zumindest einem der Ansprüche 3- 5, **gekennzeichnet durch** einen Bedienhebel (14), der mit einer drehbar gelagerten Welle (13) verbunden ist, zum Bedienen des Aktuators (1), und
der Schieber (7) einen linearer Zahnabschnitt (7c) aufweist, und
die drehbar gelagerte Welle (13), an der ein Zahnradelement (10) fest angeordnet ist, mit dem Basiselement (2) verbunden ist, wobei
das Zahnradelement (10) in Zahneingriff mit dem linearen Zahnabschnitt (7c) steht, so dass beim Bedienen des Bedienhebels (14) die Welle (13) mit dem Zahnradelement (10) in Rotation versetzbar ist und die Rotation durch das Übertragen von der Welle (13) auf den linearen Zahnabschnitt (7c) in eine Translation des Schiebers (7) transformierbar ist.

7. Die Vorrichtung nach Anspruch 6, **gekennzeichnet dadurch, dass** ein Festellelement (16) am Basiselement (2) drehbar gelagert ist, wobei das Feststellelement (16) einen vorderen zahnförmigen Abschnitt (16a) umfasst, der in Zahneingriff mit dem Zahnradelement (10) bringbar ist, so dass eine Drehrichtung des Zahnradelements (10) sperrbar ist, und weiterhin das Festellelement (16) einen Hebelabschnitt (16b) umfasst, mit dem der vordere zahnförmige Abschnitt (16a) aus dem Zahneingriff mit dem Zahnradelement (10) herauslösbar ist, so dass das Zahnradelement (10) in beide Drehrichtungen drehbar ist.

8. Die Vorrichtung nach zumindest einem der Ansprüche 3- 7, **gekennzeichnet durch** eine Rutschkupplung, die verhindert, dass der Schieber (7), wenn der Schieber (7) in der Gurtspannposition ist, über die Gurtspannposition hinausverfahrbar ist.

9. Die Vorrichtung nach zumindest einem der Ansprüche 4- 8, **dadurch gekennzeichnet, dass** das Basiselement (2) eine Aussparung (4) zur Aufnahme und zum Führen des Beckengurtes (6b) in der ersten Position des Aktuators (1) aufweist.

10. Die Vorrichtung nach Anspruch 9, **dadurch gekennzeichnet, dass** die Aussparung (4) an einem seitlichen Abschnitt (2b) des Basiselements (2) angeordnet ist, und die Aussparung (4) einen ersten Randabschnitt (4c), der im Wesentlichen senkrecht zu der Sitzkontaktfläche (2a) ausgeführt ist, einen zweiten Randabschnitt (4a) und/oder einen Basisabschnitt (4b) zum Aufliegen des Beckengurtes (6b) aufweist, dessen Flächennormale im Wesentlichen in Richtung von Gurtbefestigungspostionen (11) des Gurtes (6) am Sitz (3) zeigt.

11. Die Vorrichtung nach Anspruch 10, **dadurch gekennzeichnet, dass** der Basisabschnitt (4b) im Wesentlichen derart geformt ist, dass die Länge des Basisabschnitts (4b) im Wesentlichen der Breite des Beckengurtes (6b) entspricht,
die Länge des Gurtauflageabschnittes (8b) im Wesentlichen der Länge des Basisabschnittes (4b) entspricht,
der Gurtauflageabschnitt (8b) im Wesentlichen parallel zum Basisabschnitt (4b) verfahrbar ist, und/oder
die Enden des Basisabschnittes (4b) jeweils im Wesentlichen mit den Enden des Gurtaufnahmeabschnittes (8b) des Kontaktabschnittes (8) bündig liegen, so dass beim Ausfahren des Aktuators (1) der Teilabschnitt des Beckengurtes (6b), der in der Aussparung (4) liegt, vom Basisabschnitt (4b) an den Kontaktabschnitt (8) übergeben wird.

12. Die Vorrichtung nach zumindest einem der vorangegangenen Ansprüche, **gekennzeichnet durch** Griffelemente (18), die an oder in dem Basiselement (2) angeordnet sind.

13. Verfahren zum Befestigen einer Vorrichtung nach zumindest einem der Ansprüche 1-12 in einem Fahrzeug, umfassend die Schritte
- Einsetzen der Vorrichtung zum Befestigen eines Fahrroboters (5) auf dem Kraftfahrzeugsitz (3),
- Anlegen des Sicherheitsgurts (6), wobei der Brustgurt (6a) des Sicherheitsgurtes (6) insbesondere hinter der Vorrichtung verlegt wird und der Beckengurt (6b) in Aussparungen (4) am Basiselement (2) eingelegt wird,
- Auslösen des fahrzeugeigenen Arretiermittels zur Arretierung des Sicherheitsgurtes (6),
- Spannen des Sicherheitsgurtes (6) mittels des Aktuators (1).

14. Verfahren nach Anspruch 13, umfassend weiterhin ein Montieren der Betätigungsmittel und Stellmittel am Basiselement (2).

15. System mit einem Fahrroboter und einer Vorrichtung nach zumindest einem der Ansprüche 1-12.

## Claims

1. A device for fastening a robot driver in a motor vehicle, said device being fixable by means of a safety belt (6) on a vehicle seat (3), comprising
- a base element (2) placeable on a vehicle seat surface (3a), wherein said base element (2) is configured such that a driving robot can be fastened thereto, and
- at least one actuator (1) in contact with said base element (2) for tensioning said safety belt (6),
**characterized in that**
said actuator (1) has an extendable contact portion (8) which can be brought into contact with the locked safety belt (6),
wherein said extendable contact portion (8) of said actuator (1) can be moved away from said base element (2) for tensioning the locked safety belt (6).

2. The device according to claim 1, **characterized in that** said extendable contact portion (8), when being in contact with the locked safety belt (6), is arranged between said safety belt (6) and said base element (2) and, for tensioning said safety belt (6), a distance between said contact portion (8) and said base element (2) is increased, so that said device is fixed on said vehicle seat (2).

3. The device according to at least one of the preceding claims, **characterized in that** said actuator (1) includes a mechanically driven slider (7).

4. The device according to at least one of the preceding claims, **characterized in that** said extendable contact portion (8) of said actuator (1) is movable between a first and a second position, wherein
said first position is a position in which said extendable contact portion (8) is located closest to said base element (2), and
said second position is a position in which said extendable contact portion (8) is located farthest from said base element (2).

5. The device according to at least one of the preceding claims, **characterized in that** said extendable contact portion (8) of said actuator (1) is movable in a belt tensioning position,
wherein said belt tensioning position corresponds to a position of said extendable contact portion (8) in which said actuator (1) exerts a predetermined force.

6. The device according to at least one of claims 3-5, **characterized by** an operating lever (14) connected to a rotatably supported shaft (13) for operating said actuator (1), and
said slider (7) has a linear tooth portion (7c), and
said rotatably supported shaft (13), on which a gear element (10) is fixedly arranged, is connected to said base element (2), wherein
said gear element (10) meshes with said linear tooth portion (7c) such that, when said operating lever (14) is operated, said shaft (13) can be set in rotation with said gear element (10) and the rotation is transformable into a translation of said slider (13) by the transmission from said shaft (13) to said linear tooth portion (7c).

7. The device according to claim 6, **characterized in that** a locking element (16) is rotatably supported on said base element (2), wherein said locking element (16) comprises a front tooth-shaped portion (16a) which can be brought into meshing engagement with said gear element (10) such that a direction of rotation of said gear element (10) is lockable, and said locking element (16) further comprises a lever portion (16b), with which said front tooth-shaped portion (16a) is releasable from the meshing engagement with said gear element (10) such that said gear element (10) is rotatable in both directions of rotation.

8. The device according to at least one of claims 3- 7, **characterized by a** slip clutch preventing said slider (7), when said slider (7) is in the belt tensioning position, from moving beyond said belt tensioning position.

9. The device according to at least one of claims 4-8, **characterized in that** said base element (2) has a recess (4) for receiving and guiding said lap belt (6b) in the first position of said actuator (1).

10. The device according to claim 9, **characterized in that** said recess (4) is located on a lateral portion (2b) of said base element (2), and said recess (4) has a first edge portion (4c) formed substantially perpendicular to said seat contact surface (2a), a second edge portion (4a) and/or a base portion (4b) for fitting said lap belt (6b), the surface normal of which substantially points in the direction of belt fastening positions (11) of said belt (6) on said seat (3).

11. The device according to claim 10, **characterized in that** said base portion (4b) is substantially shaped such that the length of said base portion (4b) is substantially equal to the width of said lap belt (6b),
the length of said belt fitting portion (8b) is substantially equal to the length of said base portion (4b),
said belt fitting portion (8b) is movable substantially in parallel to said base portion (4b), and/or
the ends of said base portion (4b) are each substantially flush with the ends of said belt fitting portion (8b) of said contact portion (8b) such that, upon extension of said actuator (1), the section of said lap belt (6b) resting in said recess (4) is transferred from said base portion (4b) to said contact portion (8).

12. The device according to at least one of the preceding claims, **characterized by** grip elements (18) which are arranged on or in said base element (2).

13. A method of fastening a device according to at least one of claims 1-12 in a vehicle, comprising the steps of:
- inserting said device for fastening a robot driver (5) on said motor vehicle seat (3),
- applying said safety belt (6), wherein the chest belt (6a) of said safety belt (6) is arranged, in particular, behind said device and said lap belt (6b) is inserted into recesses (4) on said base element (2),
- triggering the vehicle's own locking means for locking said safety belt (6).
- tightening said safety belt (6) by means of said actuator (1)

14. The method of claim 13, further comprising mounting the actuating means and adjusting means on said base element (2).

15. A system comprising a robot driver and a device according to at least one of claims 1-12.

## Revendications

1. Dispositif de fixation d'un robot conducteur dans un véhicule automobile, qui est susceptible d'être fixé sur un siège de véhicule (3) à l'aide d'une ceinture de sécurité (6), comportant
- un élément de base (2) susceptible d'être posé sur une surface (3a) du siège de véhicule, l'élément de base (2) étant conçu de manière à permettre de fixer un robot conducteur à celui-ci, et
- au moins un actionneur (1) en contact avec ledit élément de base (2) pour tendre la ceinture de sécurité (6),
**caractérisé en ce que**
l'actionneur (1) comprend une portion de contact déployable (8) qui est susceptible d'être amenée en contact avec la ceinture de sécurité (6) arrêtée, la portion de contact déployable (8) de l'actionneur (1) pouvant être déplacé en éloignement de l'élément de base (2) pour tendre la ceinture de sécurité (6) arrêtée.

2. Dispositif selon la revendication 1,
**caractérisé en ce que**
la portion de contact déployable (8), lorsqu'elle est en contact avec la ceinture de sécurité (6) arrêtée, est disposée entre la ceinture de sécurité (6) et l'élément de base (2), et pour tendre la ceinture de sécurité (6), une distance entre la portion de contact (8) et l'élément de base (2) est agrandie, de telle sorte que le dispositif est fixé sur le siège de véhicule (2).

3. Dispositif selon l'une au moins des revendications précédentes,
**caractérisé en ce que**
l'actionneur (1) comprend un coulisseau (7) entraîné par voie mécanique.

4. Dispositif selon l'une au moins des revendications précédentes,
**caractérisé en ce que**
la portion de contact déployable (8) de l'actionneur (1) est déplaçable entre une première et une seconde position,
la première position étant une position dans laquelle la portion de contact déployable (8) est disposée au plus près de l'élément de base (2), et
la seconde position étant une position dans laquelle la portion de contact déployable (8) est disposée au plus loin de l'élément de base (2).

5. Dispositif selon l'une au moins des revendications précédentes,
**caractérisé en ce que**
la portion de contact déployable (8) de l'actionneur (1) est déplaçable jusque dans une position de tensionnement de ceinture,
la position de tensionnement de ceinture correspondant à une position de la portion de contact déployable (8), dans laquelle l'actionneur (1) exerce une force prédéterminée.

6. Dispositif selon l'une au moins des revendications 3 à 5,
**caractérisé par**
un levier de manipulation (14) qui est relié à un arbre (13) monté mobile en rotation pour manipuler l'actionneur (1), et
le coulisseau (7) comprend une portion dentée linéaire (7c), et
l'arbre (13) monté mobile en rotation sur lequel un élément de roue dentée (10) est agencé solidairement est relié à l'élément de base (2),
l'élément de roue dentée (10) étant en engrènement avec la portion dentée linéaire (7c), de sorte que lors de la manipulation du levier de manipulation (14), l'arbre (13) est susceptible d'être mis en rotation avec l'élément de roue dentée (10) et la rotation est transformable en une translation du coulisseau (7) par la transmission de l'arbre (13) à la portion dentée linéaire (7c).

7. Dispositif selon la revendication 6,
**caractérisé en ce que**
un élément d'immobilisation (16) est monté de façon mobile en rotation sur l'élément de base (2), l'élément d'immobilisation (16) comprenant une portion avant (16a) en forme de dent qui est susceptible d'être amené en engrènement avec l'élément de roue dentée (10), de sorte qu'un sens de rotation de l'élément de roue dentée (10) peut être bloqué, et en outre l'élément d'immobilisation (16) comprend une portion formant levier (16b) par laquelle la portion avant (16a) en forme de dent est susceptible d'être dégagé de l'engrènement avec l'élément de roue dentée (10), de sorte que l'élément de roue dentée (10) est mobile en rotation dans les deux sens de rotation.

8. Dispositif selon l'une au moins des revendications 3 à 7,
**caractérisé par**
un accouplement à glissement qui, lorsque le coulisseau (7) est dans la position de tensionnement de ceinture, empêche que le coulisseau (7) soit déplaçable au-delà de la position de tensionnement de ceinture.

9. Dispositif selon l'une au moins des revendications 4 à 8,
**caractérisé en ce que**
l'élément de base (2) présente une échancrure (4) pour recevoir et guider la sangle abdominale (6b) dans la première position de l'actionneur (1).

10. Dispositif selon la revendication 9,
**caractérisé en ce que**
l'échancrure (4) est disposée sur une portion latérale (2b) de l'élément de base (2), et l'échancrure (4) comprend une première portion de bord (4c) sensiblement perpendiculaire à la surface de contact de siège (2a), une seconde portion de bord (4a) et/ou une portion de base (4b) pour l'appui de la sangle abdominale (6b), dont la normale à la surface est dirigée sensiblement en direction de positions de fixation de ceinture (11) de la ceinture (6) au siège (3).

11. Dispositif selon la revendication 10,
**caractérisé en ce que**
la portion de base (4b) est formée sensiblement de telle sorte que la longueur de la portion de base (4b) correspond sensiblement à la largeur de la sangle abdominale (6b), la longueur de la portion d'appui de ceinture (8b) correspond sensiblement à la longueur de la portion de base (4b),
la portion d'appui de ceinture (8b) est déplaçable sensiblement parallèlement à la portion de base (4b), et/ou
les extrémités de la portion de base (4b) sont chacune sensiblement en affleurement avec les extrémités de la portion de réception de ceinture (8b) de la portion de contact (8), de sorte que lors du déploiement de l'actionneur (1), la portion partielle de la sangle abdominale (6b) qui est située dans l'échancrure (4) est remise depuis la portion de base (4b) à la portion de contact (8).

12. Dispositif selon l'une au moins des revendications précédentes,
**caractérisé par**
des éléments de poignée (18) qui sont disposés sur ou dans l'élément de base (2).

13. Procédé de fixation d'un dispositif selon l'une au moins des revendications 1 à 12 dans un véhicule, comprenant les étapes consistant à :
- mettre en place le dispositif de fixation d'un robot conducteur (5) sur le siège de véhicule (3),
- mettre la ceinture de sécurité (6), la sangle thoracique (6a) de la ceinture de sécurité (6) étant posée en particulier derrière le dispositif, et la sangle abdominale (6b) étant posée dans des échancrures (4) sur l'élément de base (2),
- déclencher le moyen d'arrêt propre au véhicule, en vue d'arrêter la ceinture de sécurité (6),
- tendre la ceinture de sécurité (6) à l'aide de l'actionneur (1).

14. Procédé selon la revendication 13, comprenant en outre un montage des moyens d'actionnement et des moyens de réglage sur l'élément de base (2).

15. Système comportant un robot conducteur et un dispositif selon l'une au moins des revendications 1 à 12.
